# EUROPÄISCHE PATENTSCHRIFT

(11) **EP 1 457 690 B1**
(45) Veröffentlichungstag und Bekanntmachung des Hinweises auf die Patenterteilung: **07.09.2005**
(21) Anmeldenummer: 04002627.0
(22) Anmeldetag: 06.02.2004
(51) Int. Cl.: F16B 47/00

(54) **Vakuumsauger**
Suction cup
Ventouse

(30) Priorität: 12.03.2003 DE 10311112
(43) Veröffentlichungstag der Anmeldung: 15.09.2004
(73) Patentinhaber: Herbert Richter Metallwaren-Apparatebau GmbH & Co., 75180 Pforzheim (DE)
(72) Erfinder: Richter, Herbert, 75331 Engelsbrand (DE)
(74) Vertreter: Dimmerling, Heinz

(56) Entgegenhaltungen:
- DE-A- 19 755 063
- NL-C- 1 002 092
- PATENT ABSTRACTS OF JAPAN vol. 1997, no. 10, 31. Oktober 1997 (1997-10-31) & JP 09 144395 A (HOKUMEI KK), 3. Juni 1997 (1997-06-03)

## Beschreibung

Die Erfindung betrifft einen Vakuumsauger nach dem Oberbegriff des Anspruchs 1, zur Befestigung von Gegenständen an glatten Flächen, mit einem einen Hohlraum aufweisenden Gehäuse und einem den Hohlraum begrenzenden plattenförmigen Saugfuß, welcher ein Betätigungselement aufweist, mittels welchem der Saugfuß in den Hohlraum hineingewölbt werden kann, wobei das Gehäuse 1 eine Hülse aufweist, zur Aufnahme von Befestigungsmitteln, und ein Federelement vorhanden ist, welches zwischen dem Gehäuse und dem Betätigungselement derart angeordnet ist, daß es der Wölbung des Saugfußes in den Hohlraum hinein entgegenwirkt.

Ein derartiger Vakuumsauger ist beispielsweise aus der NL 100 20 92 C bekannt und wird in vielfältiger Weise verwendet. Mittels des bekannten Vakuumsaugers lassen sich auf einfache Weise Gegenstände an glatten Flächen befestigen. Voraussetzung für eine gute Haftung des Vakuumsaugers an der Fläche ist, daß die Fläche eben ist und keine Verunreinigungen aufweist.

Der große Vorteil bei einer Befestigung mittels Vakuumsauger ist, daß sich der Vakuumsauger auf einfache Weise rückstandslos wieder von der Fläche entfernen läßt. Somit lassen sich mittels eines Vakuumsaugers Gegenstände auch an Flächen befestigen, welche nicht beschädigt werden dürfen.

Dadurch, daß sich bei dem bekannten Vakuumsauger der Saugfuß in den Hohlraum hineinwölbt, entsteht zwischen der auf der glatten Fläche aufliegenden Oberfläche des Saugfußes und der glatten Fläche ein Hohlraum, wodurch sich in diesem Bereich ein Vakuum ausbildet. Durch das Vakuum haftet der Saugfuß an der glatten Fläche.

Das zwischen dem Saugfuß und der glatten Fläche ausgebildete Vakuum ist um so größer, je dichter der Saugfuß auf der glatten Fläche aufliegt, bevor er in das Gehäuse des Vakuumsaugers hineingewölbt wird. Das Element zum Bedienen des Betätigungselements ist daher so ausgebildet, daß es den Saugfuß im Ruhezustand möglichst fest auf die glatte Oberfläche aufdrückt. Wegen der fertigungsbedingten Toleranzen ist es jedoch nicht möglich, sicherzustellen, daß der Saugfuß im Ruhezustand stets fest auf der glatten Oberfläche aufliegt.

Es ist Aufgabe der Erfindung, einen eingangs genannten Vakuumsauger derart auszubilden, daß er eine sehr hohe Saugkraft hat.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Vakuumsauger zur Befestigung von Gegenständen an glatten Flächen, mit einem einen Hohlraum aufweisenden Gehäuse und einem den Hohlraum begrenzenden plattenförmigen Saugfuß, welcher ein Betätigungselement aufweist, mittels welchem der Saugfuß in den Hohlraum hineingewölbt werden kann, wobei das Gehäuse eine Hülse aufweist, zur Aufnahme von Befestigungsmitteln, und ein Federelement vorhanden ist, welches zwischen dem Gehäuse und dem Betätigungselement derart angeordnet ist, daß es der Wölbung des Saugfußes in den Hohlraum hinein entgegenwirkt, dadurch gekennzeichnet, daß das Federelement länglich ausgebildet ist und sich in die Hülse hineinerstreckt.

Dadurch, daß ein Federelement vorhanden ist, welches zwischen dem Gehäuse und dem Betätigungselement derart angeordnet ist, daß es der Wölbung des Saugfußes in den Hohlraum hinein entgegenwirkt, wird der Saugfuß fest auf die glatte Fläche gedrückt. Wegen der Federwirkung des Federelements bleiben Fertigungstoleranzen hinsichtlich der Kraft, mit der der Saugfuß auf die glatte Fläche aufgedrückt wird, ohne Auswirkungen. Es ist somit gewährleistet, daß der Saugfuß im Ruhezustand fest auf der glatten Fläche aufliegt. Hierdurch wird eine optimale Saugkraft erreicht.

Besonders vorteilhaft ist es jedoch, daß das Federelement länglich ausgebildet ist, und sich in die Hülse des Gehäuses des Vakuumsaugers hineinerstreckt. Eine derartige Ausführungsform hat den sehr großen Vorteil, daß für das Federelement nahezu beliebig viel Platz zur Verfügung steht, so daß es beliebig stark ausgebildet ist. Könnte sich das Federelement nicht in die Hülse hineinerstrecken, wäre der Platz für das Federelement auf das Innere des Gehäuses des Vakuumsaugers beschränkt. Hierdurch ist der für das Federelement zur Verfügung stehende Raum in der Regel nicht sehr groß, was den Nachteil mit sich bringt, daß seine Größe beschränkt ist. Eine beschränkte Größe des Federelements hat jedoch zwangsläufig zur Folge, daß die von ihm ausgehende Kraft ebenfalls beschränkt ist.

Durch die Anordnung des Federelements in der Hülse läßt sich das Federelement in vorteilhafter Weise sehr stark ausbilden, wodurch es eine große Kraft erzeugt. Durch die große Kraft wiederum wird der Saugfuß sehr fest und sehr dicht auf die glatte Fläche aufgedrückt. Dies wiederum resultiert in eine sehr große Saugkraft, so daß sich auch relativ schwere Gegenstände mittels des erfindungsgemäßen Vakuumsaugers befestigen lassen.

Sehr vorteilhaft ist auch eine Ausführungsform der Erfindung, bei der das Betätigungselement als Zapfen ausgebildet ist, und das Federelement eine Spiralfeder ist, die auf den Zapfen wirkt. Hierbei ist es besonders vorteilhaft, wenn zwischen der Spiralfeder und dem Zapfen ein Ausgleichsstück angeordnet ist. Durch das Ausgleichsstück läßt sich die von der Spiralfeder erzeugte Kraft sehr gut auf das Betätigungselement beziehungsweise den Saugfuß übertragen. Des weiteren läßt sich mittels des Ausgleichsstücks die Spiralfeder auf einfache Weise auf dem Betätigungselement anbringen. Dies ist insbesondere sehr vorteilhaft bei der Montage des Vakuumsaugers.

Dadurch, daß das Federelement auf das Betätigungselement wirkt, läßt sich in vorteilhafter Weise erreichen, daß das Betätigungselement durch die Federkraft zuverlässig in seiner Arbeitsstellung oder in seiner Ruhestellung verbleibt. Durch entsprechende Ausbildung des Betätigungselements läßt sich eine Schnappwirkung des Betätigungselements erreichen. Des weiteren ist dadurch, daß sich das Federelement oberhalb des Betätigungselements befindet, die Größe des Federelements durch die Größe des Hohlraums des Gehäuses des Vakuumsaugers nicht begrenzt.

Sehr vorteilhaft ist eine Ausführungsform der Erfindung, bei der auf das Betätigungselement mittels eines Bedienbügels eine Kraft ausübbar ist, wobei die beiden Bügelarme des Bedienbügels als Exzenter ausgebildet sind. Dadurch, daß zur Betätigung des Betätigungselement ein Bügel verwendet wird, wird die Kraft zur Betätigung des Betätigungselements auf zwei Hebel verteilt, so daß auch mit einer relativ leichten Ausführung eines Bedienbügels große Kräfte auf das Betätigungselement ausgeübt werden können. Des weiteren wird dadurch, daß das Betätigungselement mittels zwei in einem relativ großen Abstand voneinander angeordneter Bügelarme betätigt wird, erreicht, daß die auf das Betätigungselement ausgeübte Kraft immer exakt in dieselbe Richtung wirkt. Denn durch den Abstand der beiden Bügelarme ist ein Verkanten des Bedienbügels nahezu ausgeschlossen. Die Wirkung der Kraft stets in dieselbe Richtung wirkt sich sehr vorteilhaft auf die Zuverlässigkeit des Vakuumsaugers aus.

Bei einer weiteren besonderen Ausführungsform der Erfindung ist vorgesehen, daß in der Hülse ein biegsames Distanzstück angeordnet ist, welches aus einem durch Biegung nicht bleibend verformbaren Rohr besteht, in dessen Inneren ein durch Biegung bleibend verformbarer Stab angeordnet ist, wobei die Hülse einen Stopfen bildet, welcher fest mit dem Stab und dem Rohr verbunden ist. Hierdurch wird in vorteilhafter Weise erreicht, daß der Stab mit dem Rohr eine kompakte Einheit bildet. Das so gebildete Distanzstück hat im wesentlichen dieselbe Funktion wie ein herkömmlicher sogenannter Schwanenhals, läßt sich jedoch viel kostengünstiger herstellen.

Sehr vorteilhaft bei der letztgenannten Ausführungsform ist es, wenn das Rohr ein gerilltes Kunststoffrohr ist und der Stab aus Aluminium besteht.

Des weiteren hat sich eine Ausführungsform als sehr vorteilhaft herausgestellt, bei der an dem der Hülse abgewandten Ende des Distanzstückes an dem Distanzstück eine Halteplatte angeordnet ist. Hierbei ist es ebenfalls sehr vorteilhaft, wenn die Halteplatte eine weitere Hülse aufweist, welche einen Stopfen bildet, welcher fest mit dem Stab und dem Rohr verbunden ist. Mittels einer derartigen Ausführungsform lassen sich auf einfache Weise Gegenstände in beliebigen Positionen befestigen.

Als sehr vorteilhaft hat sich herausgestellt, wenn die Halteplatte winkelförmige Haltekrallen aufweist. Mittels einer derartigen Ausführungsform läßt sich die erfindungsgemäße Vorrichtung sehr universell einsetzen. Mittels der Haltekrallen lassen sich auf einfache Weise schnell und zuverlässig Gegenstände mit der Halteplatte verbinden, welche zu den Haltekrallen korrespondierende Ausnehmungen aufweisen, welche Stege haben, die von den Haltekrallen umgriffen werden können. Sehr vorteilhaft hierbei ist es, wenn die Ausnehmungen so ausgebildet sind, daß sich der Gegenstand in um 90 Grad versetzte Positionen mit der Halteplatte verbinden läßt.

Sofern mit der Halteplatte zu verbindende Gegenstände keine Ausnehmungen aufweisen, kann eine Adapterplatte verwendet werden, welche einerseits die Ausnehmungen aufweist, und andererseits Elemente aufweist, welche zur Befestigung der betreffenden Gegenstände geeignet sind. Sehr vorteilhaft ist es beispielsweise, wenn die Adapterplatte eine selbstklebende Oberfläche aufweist oder die Befestigung mittels eines sogenannten Klettverschlusses herstellbar ist.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1.: eine Befestigungsvorrichtung mit einem erfindungsgemäßen Vakuumsauger,
- Figur 2: die in Figur 1 gezeigte Befestigungsvorrichtung im Schnitt,

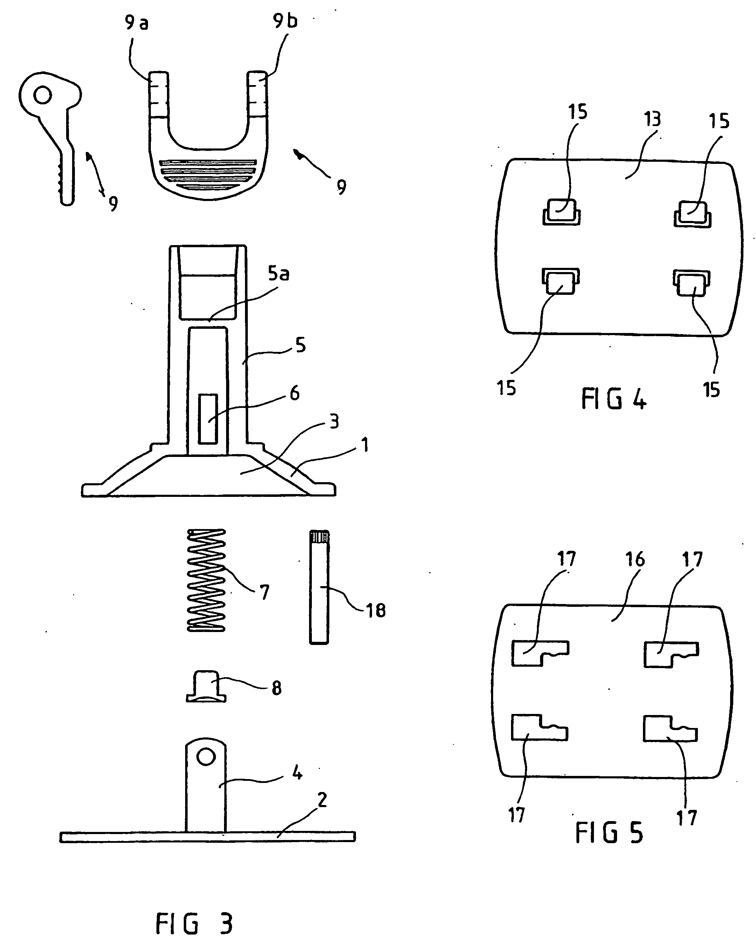

- Figur 3: einen erfindungsgemäßen Vakuumsauger in Explosionsdarstellung,
- Figur 4: eine Halteplatte in der Draufsicht und
- Figur 5: eine Adapterplatte in der Draufsicht.

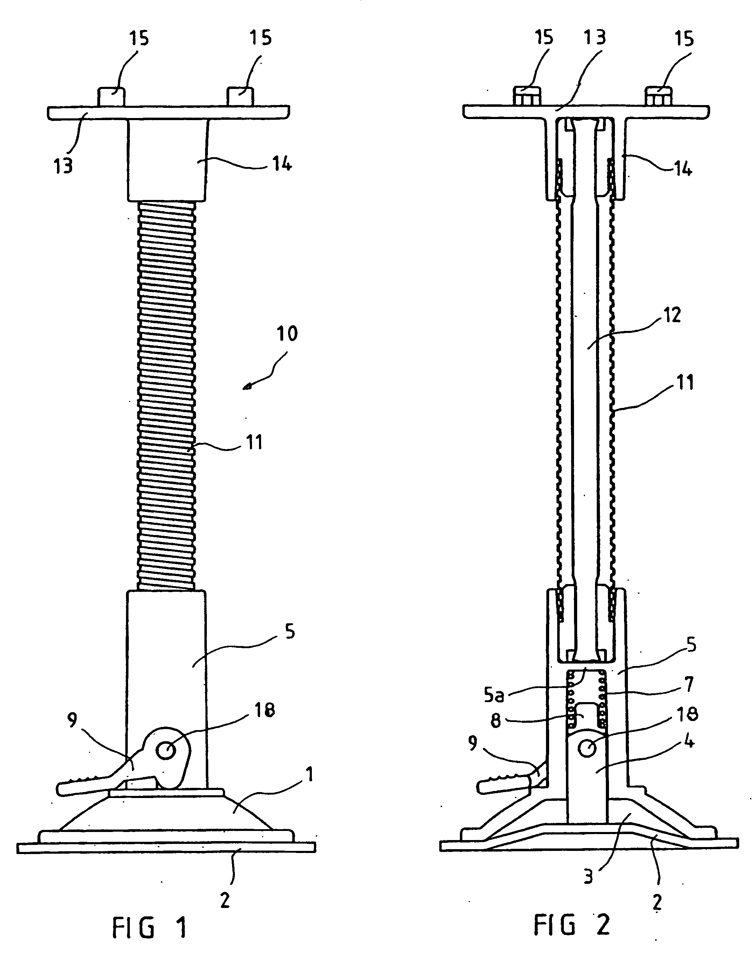

Wie insbesondere den Figuren 1 und 2 entnommen werden kann, weist ein erfindungsgemäßer Vakuumsauger ein Gehäuse 1 auf, welches einen Hohlraum 3 hat, der von einem plattenförmigen Saugfuß 2 begrenzt wird. An dem dem Saugfuß gegenüberliegenden Ende weist das Gehäuse 1 eine Hülse 5 auf, welche im Inneren einen Steg 5a hat, durch den das Innere der Hülse zweigeteilt ist, wodurch die Hülse 5 keine durchgehende Öffnung hat.

Am Saugfuß 2 ist ein als Betätigungselement ausgebildeter Zapfen 4 befestigt, welcher sich in die Hülse 5 erstreckt. Durch den Zapfen 4 erstreckt sich in Querrichtung eine Achse 18, auf welcher beidseits außerhalb der Hülse 5 jeweils ein Arm 9a, 9b eines Bedienbügels 9 angeordnet ist. Die Bügelarme 9a, 9b sind als Exzenter ausgebildet, wodurch die Achse 18 beim Verschwenken des Bedienbügels 9 eine Bewegung in axialer Richtung der Hülse 5 durchführt, da die Exzenter sich auf einem Rand des Gehäuses 1 abstützen. Hierzu weist die Hülse 5 in ihrer Wandung gegenüberliegende Langlöcher 6 auf.

Oberhalb des Zapfens 4 ist ein Ausgleichsstück 8 angeordnet, welches einerseits an die Stirnseite des Zapfens 4 angepaßt ist und andererseits an seinem dem Zapfen 4 abgewandten Ende gegenüber dem Innendurchmesser der Hülse 5 einen verringerten Durchmesser hat.

Auf dem verringerten Durchmesser des Ausgleichsstücks 8 ist eine Spiralfeder 7 angeordnet, welche als Druckfeder ausgebildet ist. Die Druckfeder stößt an ihrem dem Ausgleichsstück 8 abgewandten Ende gegen den Steg 5a der Hülse 5. Hierdurch wird im Ergebnis auf den Saugfuß 2 eine Kraft ausgeübt, die den Saugfuß 2 aus dem Hohlraum 3 des Gehäuses 1 herausdrückt, sofern er nicht durch die Exzenter des Bedienbügels 9 fixiert ist.

An dem dem Saugfuß 2 abgewandten Ende ist in der Hülse 5 ein Ende eines Distanzstücks 10 angeordnet. An dem der Hülse 5 entgegengesetzten Ende ist an dem Distanzstück 10 eine Halteplatte 13 angeordnet.

Das Distanzstück 10 besteht aus einem gerillten Kunststoffrohr 11, in dessen Inneren sich ein Aluminiumstab 12 befindet. An dem dem Distanzstück 10 zugewandten Ende ist die Hülse 5 als Stopfen ausgebildet, welcher fest mit dem Stab 12 und dem Rohr 11 verbunden ist.

Die Halteplatte 13 weist eine weitere Hülse 14 auf, welche ebenfalls als Stopfen ausgebildet ist, welcher fest mit dem Stab 12 und dem Rohr 11 verbunden ist. Hierdurch ist das Distanzstück 10 auch fest mit der Halteplatte 13 verbunden.

Die Halteplatte 13 weist winkelförmige Haltekrallen 15 auf. Mittels der Haltekrallen 15 lassen sich auf einfache Weise schnell und zuverlässig Gegenstände mit der Halteplatte 13 verbinden, welche zu den Haltekrallen 15 korrespondierende Ausnehmungen aufweisen. Die Ausnehmungen müssen hierzu Stege haben, welche von den Haltekrallen 15 umgriffen werden können.

Weisen die Gegenstände keine Ausnehmungen auf, kann eine Adapterplatte 16 verwendet werden, welche einerseits die entsprechend ausgebildeten Ausnehmungen 17 aufweist, und andererseits Befestigungselemente aufweist, mittels welcher die Gegenstände mit der Adapterplatte 16 verbunden werden können. Die Befestigungselemente können durch eine selbstklebende Oberfläche der Adapterplatte 16 gebildet sein. Statt einer selbstklebenden Oberfläche kann die Adapterplatte aber auch mit einer als sogenannte Kletthaftung ausgebildeten Oberfläche versehen sein.

## Patentansprüche

1. Vakuumsauger zur Befestigung von Gegenständen an glatten Flächen, mit einem einen Hohlraum (3) aufweisenden Gehäuse (1) und einem den Hohlraum (3) begrenzenden plattenförmigen Saugfuß (2), welcher ein Betätigungselement (4) aufweist, mittels welchem der Saugfuß (2) in den Hohlraum (3) hineingewölbt werden kann, wobei das Gehäuse (1) eine Hülse (5) aufweist, zur Aufnahme von Befesti-gungsmitteln, und ein Federelement (7) vorhanden ist, welches zwischen dem Gehäuse (1) und dem Betätigungselement (4) derart angeordnet ist, daß es der Wölbung des Saugfußes (2) in den Hohlraum (3) hinein entgegenwirkt,
**dadurch gekennzeichnet,**
**daß** das Federelement (7) länglich ausgebildet ist und sich in die Hülse (5) hineinerstreckt.

2. Vakuumsauger nach Anspruch 1,
**dadurch gekennzeichnet,**
**daß** das Betätigungselement (4) als Zapfen (4) ausgebildet ist, und das Federelement (7) eine Spiralfeder (7) ist, welche auf den Zapfen (4) wirkt.

3. Vakuumsauger nach Anspruch 2,
**dadurch gekennzeichnet,**
**daß** zwischen Spiralfeder (7) und Zapfen (4) ein Ausgleichsstück (8) angeordnet ist.

4. Vakuumsauger nach einem der Ansprüche 1 bis 3,
**dadurch gekennzeichnet,**
**daß** auf das Betätigungselement (4) mittels eines Bedienbügels (9) eine Kraft ausübbar ist, wobei die beiden Bügelarme (9a, 9b) als Exzenter ausgebildet sind.

5. Vakuumsauger nach einem der Ansprüche 1 bis 4,
**dadurch gekennzeichnet,**
**daß** in der Hülse (5) ein biegsames Distanzstück (10) angeordnet ist, welches aus einem durch Biegung nicht bleibend verformbaren Rohr (11) besteht, in dessen Inneren ein durch Biegung bleibend verformbarer Stab (12) angeordnet ist, wobei die Hülse (5) einen Stopfen bildet, welcher fest mit dem Stab (12) und dem Rohr (11) verbunden ist.

6. Vakuumsauger nach Anspruch 5,
**dadurch gekennzeichnet,**
**daß** das Rohr (11) ein gerilltes Kunststoffrohr ist und der Stab (12) aus Aluminium besteht.

7. Vakuumsauger nach Anspruch 5 oder 6,
**dadurch gekennzeichnet,**
**daß** an dem der Hülse (5) abgewandten Ende des Distanzstückes (10) an dem Distanzstück (10) eine Halteplatte (13) angeordnet ist.

8. Vakuumsauger nach Anspruch 7,
**dadurch gekennzeichnet,**
**daß** die Halteplatte (13) eine weitere Hülse (14) aufweist, welche einen Stopfen bildet, welcher fest mit dem Stab (12) und dem Rohr (11) verbunden ist.

9. Vakuumsauger nach Anspruch 7 oder 8,
**dadurch gekennzeichnet, daß** die Halteplatte (13) winkelförmige Haltekrallen (15) aufweist.

## Claims

1. Suction cup for securing objects to smooth surfaces, having a housing (1) containing a cavity (3) and having a plate-like suction base (2), which suction base (2) forms a boundary of the cavity (3) and has an actuating member (4) by means of which the suction base (2) can be arched into the cavity (3), the housing (1) having a sleeve (5) for receiving attaching means, and a spring member (7) being present which is arranged between the housing (1) and the actuating member (4) in such a way that it acts to oppose the arching of the section base (2) into the cavity (3), **characterised in that** the spring member (7) is of an elongated form and extends into the sleeve (5).

2. Suction cup according to claim 1, **characterised in that** the actuating member (4) is in the form of a spigot (4), and the spring member (7) is a coil spring (7) which acts on the spigot (4).

3. Suction cup according to claim 2, **characterised in that** a compensating piece (8) is arranged between the coil spring (7) and the spigot (4).

4. Suction cup according to one of claims 1 to 3, **characterised in that** a force can be exerted on the actuating member (4) by means of a operating yoke (9), the two arms (9a, 9b) of the yoke taking the form of cams.

5. Suction cup according to one of claims 1 to 4, **characterised in that** there is arranged in the sleeve (5) a flexible spacing member (10) which comprises a tube (11) not able to be permanently deformed by bending, in the interior of which is arranged a rod (12) able to be permanently deformed by bending, the sleeve (5) forming a plug which is firmly connected to the rod (12) and the tube (11).

6. Suction cup according to claim 5, **characterised in that** the tube (11) is a grooved tube of plastics material and the rod (12) is composed of aluminium.

7. Suction cup according to claim 5 or 6, **characterised in that** a mounting plate (13) is arranged on the spacing member (10), at the end thereof remote from the sleeve (5).

8. Suction cup according to claim 7, **characterised in that** the mounting plate (13) has a further sleeve (14) which forms a plug which is firmly connected to the rod (12) and the tube (11).

9. Suction cup according to claim 7 or 8, **characterised in that** the mounting plate (13) has angled retaining dogs (15).

## Revendications

1. Ventouse pour la fixation d'objets à des surfaces lisses, comprenant un corps (1) muni d'une cavité (3), et une embase d'aspiration (2) en forme de platine, qui délimite ladite cavité (3) et est pourvue d'un élément d'actionnement (4) au moyen duquel l'embase d'aspiration (2) peut être bombée à l'intérieur de ladite cavité (3), sachant que le corps (1) présente une douille (5) afin de recevoir des moyens de fixation, et qu'il est prévu un élément élastique (7) interposé, entre ledit corps (1) et ledit élément d'actionnement (4), de manière à s'opposer au bombement de l'embase d'aspiration (2) dans la cavité (3),
**caractérisée par le fait**
**que** l'élément élastique (7) est de réalisation allongée, et s'engage ou s'étend dans la douille (5).

2. Ventouse selon la revendication 1,
**caractérisée par le fait**
**que** l'élément d'actionnement (4) est conçu sous la forme d'un tenon (4), et l'élément élastique (7) est un ressort hélicoïdal (7) agissant sur ledit tenon (4).

3. Ventouse selon la revendication 2,
**caractérisée par le fait**
**qu'**une pièce compensatrice (8) est interposée entre le ressort hélicoïdal (7) et le tenon (4).

4. Ventouse selon l'une des revendications 1 à 3,
**caractérisée par le fait**
**qu'**une force peut être appliquée à l'élément d'actionnement (4) au moyen d'un étrier de manoeuvre (9), les deux bras (9a, 9b) dudit étrier étant conçus comme des excentriques.

5. Ventouse selon l'une des revendications 1 à 4,
**caractérisée par le fait**
**que** la douille (5) renferme une pièce souple d'espacement (10) constituée d'un tube (11) non durablement déformable par flexion, dans l'espace interne duquel se trouve une tige (12) durablement déformable par flexion, ladite douille (5) matérialisant un bouchon relié rigidement à ladite tige (12) et audit tube (11).

6. Ventouse selon la revendication 5,
**caractérisée par le fait**
**que** le tube (11) est un tube annelé en matière plastique, et la tige (12) consiste en de l'aluminium.

7. Ventouse selon la revendication 5 ou 6,
**caractérisée par le fait**
**qu'**une plaquette de retenue (13) est disposée sur la pièce d'espacement (10), à l'extrémité de ladite pièce d'espacement (10) qui est tournée à l'opposé de la douille (5).

8. Ventouse selon la revendication 7,
**caractérisée par le fait**
**que** la plaquette de retenue (13) présente une douille (14) supplémentaire, qui matérialise un bouchon relié rigidement à la tige (12) et au tube (11).

9. Ventouse selon la revendication 7 ou 8,
**caractérisée par le fait que** la plaquette de retenue (13) comporte des griffes d'arrêt (15) en forme de cornières.
